# EUROPÄISCHE PATENTANMELDUNG

(11) **EP 4 800 248 A1**
(43) Veröffentlichungstag der Anmeldung: **02.09.2026**
(21) Anmeldenummer: 26161018.2
(22) Anmeldetag: 26.02.2026
(51) Int. Cl.: F04D 13/06, F04D 15/00, H02K 9/06, H02K 9/14, F04D 29/58

(54) **ROTATIONSZUSTAND EINES KREISELPUMPENAGGREGATS**

(30) Priorität: 27.02.2025 DE 102025107443
(71) Anmelder: KSB SE & Co. KGaA, 67227 Frankenthal (DE)
(72) Erfinder: EBELT, Gerd, 67227 Frankenthal (DE); KOLANO, Michael, 67227 Frankenthal (DE); LOOS, Melanie, 67227 Frankenthal (DE); MADES, Dr. Jochen, 67227 Frankenthal (DE)

(57) **Zusammenfassung**

Die Erfindung betrifft eine Vorrichtung zur Erkennung des Betriebszustandes einer Antriebseinheit (2) einer Kreiselpumpe (1). Die Antriebseinheit (2) weist Kühlrippen (8) auf. Die Vorrichtung weist eine Anordnung (12) und eine Auswerteeinheit auf. Die Anordnung (12) umfasst einen Luftstromrotor (13), mindestens eine Halterung (14), eine Rotorachse (15) und eine Signalerzeugungseinheit (16).

## Beschreibung

Die Erfindung betrifft eine Vorrichtung zur Erkennung des Betriebszustandes einer Antriebseinheit einer Kreiselpumpe, wobei die Antriebseinheit Kühlrippen aufweist.

Kreiselpumpen spielen eine zentrale Rolle in zahlreichen industriellen und privaten Anwendungen, da sie Flüssigkeiten effizient fördern. Die Leistung und Zuverlässigkeit eines Kreiselpumpenaggregats hängen dabei maßgeblich von der präzisen Überwachung und Steuerung der Betriebszustände ab, insbesondere des Motors, der als Hauptantrieb fungiert.

Ein typisches Kreiselpumpenaggregat besteht aus einer elektrisch betriebenen Pumpe, die durch einen mechanisch gekoppelten Elektromotor angetrieben wird. Dieser Motor ist in der Regel mit einem Lüfter ausgestattet, der gezielt einen Luftstrom erzeugt, um die Abwärme abzuleiten und Überhitzungen zu vermeiden. Zusätzliche Kühlrippen verbessern die Wärmeabgabe und verlängern so die Lebensdauer des Motors.

Die Überwachung dieser Komponenten ist essenziell, um den sicheren Betrieb zu gewährleisten, Wartungsintervalle optimal zu planen und Schäden rechtzeitig zu erkennen. Traditionelle Überwachungssysteme nutzen eine Vielzahl von Sensoren wie Schwingungs- oder Temperatursensoren. Diese sind jedoch oft mit Nachteilen behaftet: Sie erfordern entweder eine konstante Energieversorgung, was bei batteriebetriebenen loT-Geräten die Lebensdauer einschränkt, oder arbeiten mit großen Abtastintervallen, die Verzögerungen bei der Erkennung kritischer Zustände verursachen können.

Im Kontext des Industrial Internet of Things (IIoT) bietet die Vernetzung intelligenter Geräte neue Möglichkeiten zur Optimierung der Maschinenüberwachung. IIoT-Geräte können Daten erfassen, mit anderen Systemen kommunizieren und in Echtzeit Rückmeldungen geben. Diese Technologie verbessert Effizienz, reduziert Ausfallzeiten und ermöglicht eine präzisere Wartungsplanung. Doch auch hier bestehen Herausforderungen, insbesondere bei batteriebetriebenen Geräten, die aufgrund ihres Energiebedarfs nur eingeschränkte Überwachungsintervalle erlauben.

Ein häufiges Problem besteht darin, dass batteriebetriebene loT-Geräte Daten in größeren Zeitabständen erfassen, um Energie zu sparen, wodurch kritische Zustände der Maschine mitunter verzögert oder gar nicht erkannt werden. Zudem arbeiten viele Überwachungssysteme unabhängig vom tatsächlichen Betriebsstatus der Maschine, was zu unnötigem Energieverbrauch und einer verkürzten Batterielebensdauer führt. Dies steht im Gegensatz zu den Anforderungen an nachhaltige, energieeffiziente Systeme, die sich flexibel an die Betriebsbedingungen anpassen sollten.

Darüber hinaus erschweren die Komplexität und die Abhängigkeit von externen Sensoren und Energiequellen den Einsatz solcher Systeme, insbesondere in räumlich oder energetisch eingeschränkten Umgebungen. Bestehende Ansätze wie Schwingungs- oder Temperaturanalysen arbeiten oft zeitverzögert und sind anfällig für Störungen durch benachbarte Maschinen, beispielsweise durch deren Schwingungen. Diese Einschränkungen unterstreichen den Bedarf an neuen, innovativen Lösungen, die eine präzise, zuverlässige und energieeffiziente Überwachung ermöglichen.

Aufgabe der Erfindung ist es eine Vorrichtung zur Erkennung des Betriebszustandes einer Antriebseinheit einer Kreiselpumpe bereitzustellen, die möglichst energieeffizient den Betriebszustand der Kreiselpumpe erfasst. Weiterhin soll sich die Vorrichtung durch eine kompakte Bauform auszeichnen und energieautark funktionieren können. Die Vorrichtung soll mit einer Auswerteeinheit in einer kommunikativen Verbindung stehen können. Die Vorrichtung soll einfach und kostengünstig realisiert werden können.

Diese Aufgabe wird erfindungsgemäß durch eine Vorrichtung zur Erkennung des Betriebszustandes einer Antriebseinheit einer Kreiselpumpe gemäß den Merkmalen des Anspruchs 1 gelöst. Bevorzugte Varianten sind den nebengeordneten Hauptansprüchen, den Unteransprüchen, der Beschreibung und den Zeichnungen zu entnehmen.

Erfindungsgemäß weist die Vorrichtung eine Anordnung und eine Auswerteeinheit auf, wobei die Anordnung einen Luftstromrotor, mindestens eine Halterung, eine Rotorachse und eine Signalerzeugungseinheit umfasst.

Die Vorrichtung zur Erkennung des Betriebszustandes einer Antriebseinheit, insbesondere der Antriebseinheit einer Kreiselpumpe, ermöglicht durch eine innovative Kombination mechanischer und elektronischer Komponenten eine zuverlässige und präzise Zustandsüberwachung. Diese Vorrichtung zeichnet sich dadurch aus, dass sie eine Anordnung und eine Auswerteeinheit umfasst.

Die Anordnung besteht beispielsweise aus einem Luftstromrotor, einer Halterung, einer Rotorachse und einer Signalerzeugungseinheit, die in enger funktionaler Verbindung stehen, um den Betriebszustand der Antriebseinheit zu erfassen.

Der Luftstromrotor bildet zum Beispiel das zentrale Element der Anordnung, da er die durch die Kühlrippen der Antriebseinheit erzeugte Luftströmung nutzt, um in Rotation versetzt zu werden. Diese Rotation dient beispielsweise als Grundlage für die Signalerzeugung, da sie den aktiven Zustand der Antriebseinheit unmittelbar widerspiegelt.

Bei einer Variante der Erfindung gewährleistet die Rotorachse eine präzise und reibungsarme Rotation, wodurch eine störungsfreie Signalumsetzung ermöglicht wird.

Bei einer Ausführungsvariante der Erfindung ist die Vorrichtung zwischen zwei Kühlrippen des Elektromotors mit Ausrichtung bzw. in ihrer Anordnung in Richtung der Pumpe positioniert. Dadurch ist der Luftstrom über die längere Strömung zwischen zwei Kühlrippen gerichtet, was für den Betrieb der Vorrichtung vorteilhaft sein kann.

Beispielsweise steht die Halterung mit benachbarten Kühlrippen in Verbindung.

Die Halterung sorgt beispielsweise für die mechanische Befestigung der Anordnung und steht in direkter Verbindung mit den benachbarten Kühlrippen der Antriebseinheit. Diese Integration ermöglicht eine stabile und zuverlässige Positionierung des Luftstromrotors, wodurch eine optimale Nutzung der Luftströmung sichergestellt wird.

Zusätzlich kann die Halterung so gestaltet sein, dass sie beispielsweise eine Umhausung der Anordnung stützt, welche den Luftstromrotor zumindest teilweise umgibt. Die Umhausung bietet dem Luftstromrotor Schutz vor äußeren Einflüssen wie Staub, Feuchtigkeit und mechanischen Störungen, ohne die Funktionalität des Luftstromrotors einzuschränken.

Bei einer Variante der Erfindung ist die Halterung als Klippverbindung ausgebildet und an das Gehäuse der Antriebseinheit geklippt.

Bei einer alternativen Variante der Erfindung ist die Halterung an das Gehäuse der Antriebseinheit geklebt oder geklemmt oder verschraubt oder magnetisch befestigt.

Beispielsweise steht die Halterung mit einer Laterne oder dem Gehäuse der Antriebseinheit oder einem Pumpengehäuse in Verbindung.

Bei einer weiteren Ausführungsvariante der Erfindung ist die Halterung an die Laterne, die das Pumpengehäuse mit der Antriebseinheit verbindet und gleichzeitig beabstandet, geklippt oder geklebt oder geklemmt oder verschraubt oder magnetisch befestigt. Dabei strömt die Luftströmung vom Lüfterrad der Antriebseinheit über das Gehäuse der Antriebseinheit und anschließend über die Laterne, wodurch der Luftstromrotor in Rotation versetzt wird.

Bei einer alternativen Ausführungsvariante ist die Anordnung mit der Halterung am Gehäuse der Antriebseinheit, allerdings hinter den Kühlrippen und gleichzeitig in Strömungsrichtung gesehen vor der Laterne angeordnet.

Bei einer zusätzlichen Ausführungsvariante ist die Anordnung mit der Halterung am Pumpengehäuse angeordnet. Dabei überströmt die Luftströmung des Lüfters der Antriebseinheit zunächst das Gehäuse mit Kühlrippen der Antriebseinheit und die Laterne bis der Luftstromrotor der Anordnung am Pumpengehäuse erreicht wird.

Beispielsweise steht die Signalerzeugungseinheit drahtlos mit der Auswerteeinheit in Verbindung.

Die Signalerzeugungseinheit übernimmt zum Beispiel die Aufgabe, die mechanische Bewegung des Rotors in elektrische Signale umzuwandeln. Diese Signale repräsentieren den Betriebszustand der Antriebseinheit und werden drahtlos an die Auswerteeinheit übertragen. Die drahtlose Kommunikation zwischen Signalerzeugungseinheit und Auswerteeinheit minimiert beispielsweise den Verkabelungsaufwand und ermöglicht eine flexible, aber auch nachträgliche Integration der Vorrichtung in bestehende Systeme.

Bei einer Variante der Erfindung verarbeitet die Auswerteeinheit die empfangenen Signale und interpretiert sie zur Bestimmung des Betriebszustandes der Antriebseinheit. Sie kann beispielsweise lokal oder alternativ auch in einem cloudbasierten System betrieben werden, um die Daten einer Vielzahl von Kreiselpumpen zu erfassen und zentral auszuwerten. Diese Auswertung ermöglicht eine präzise Überwachung und Dokumentation von Betriebszuständen, einschließlich beispielsweise der Ein- und Ausschaltzustände der Pumpen.

Bei einer weiteren Variante umfasst die Erfindung ferner ein Verfahren, welches die Funktionalität der Vorrichtung in einem cloudbasierten Industrie-4.0-System beschreibt. Das Verfahren sieht vor, dass die Signalerzeugungseinheit durch den Luftstromrotor aktiviert wird, sobald sich die Antriebseinheit im Betriebszustand befindet. Das erzeugte Signal wird drahtlos bzw. kabelungebunden an die Auswerteeinheit übermittelt, welche die Daten zentral erfasst und auswertet, um den Betriebszustand jeder mit der Auswerteeinheit korrespondierenden Kreiselpumpe zu bestimmen. Die cloudbasierte Architektur ermöglicht eine skalierbare Überwachung und Verwaltung eines umfassenden Pumpennetzwerks.

Ein wesentlicher Vorteil des Verfahrens liegt in der genauen Bestimmung und Speicherung des Ein- oder Ausschaltzustandes jeder Pumpe des Systems. Darüber hinaus kann die Signalerzeugungseinheit beispielsweise ein Signal direkt an eine Regelungseinheit senden, wodurch eine unmittelbare Steuerung und Optimierung der Pumpenbetriebsweise ermöglicht wird. Die präzise Erkennung des Betriebszustandes reduziert die Wahrscheinlichkeit von Ausfällen und erlaubt eine effizientere Planung von Wartungsmaßnahmen.

Die innovative Nutzung des Luftstromrotors und der drahtlosen Signalübertragung in Kombination mit der cloudbasierten Auswertung bietet eine energieeffiziente, zuverlässige und skalierbare Lösung für die Zustandsüberwachung von Kreiselpumpen. Die Verbindung der Signalerzeugungseinheit mit den Kühlrippen der Antriebseinheit und die Integration in eine loT-Architektur setzen neue Maßstäbe für die Überwachung industrieller Maschinen und Systeme.

Gemäß der Erfindung umfasst das Verfahren zur Erkennung des Betriebszustandes einer Antriebseinheit einer Kreiselpumpe innerhalb eines cloudbasierten Industrie-4.0-Systems, welches eine Vielzahl von Kreiselpumpen umfassen kann, wobei jede Kreiselpumpe eine Antriebseinheit mit Kühlrippen sowie eine Vorrichtung zur Erkennung des Betriebszustandes aufweist, die folgenden Schritte:
Beispielsweise wird die Signalerzeugungseinheit durch den Luftstromrotor aktiviert, sobald sich die Antriebseinheit der Kreiselpumpe im Betriebszustand befindet. Dies geschieht durch die Bewegung des Luftstroms, der den Rotor antreibt und damit ein Signal generiert. Das erzeugte Signal wird zum Beispiel drahtlos an eine separate Auswerteeinheit übertragen. Hierbei ermöglicht die drahtlose Übertragung eine effiziente und schnelle Weiterleitung der Betriebsinformationen, ohne zusätzliche Verkabelung oder lokale Datenspeicherung zu benötigen.

In einem weiteren Schritt werden die von der Signalerzeugungseinheit übertragenen Signale erfasst und an eine cloudbasierte Auswerteeinheit gesendet. Diese cloudbasierte Auswerteeinheit verarbeitet beispielsweise die empfangenen Signale, wertet sie aus und bestimmt den Betriebszustand der jeweiligen Kreiselpumpe. Bei der Variante der Erfindung, die eine zentrale Verarbeitung in der Cloud vorsieht, wird es möglich, den Betriebszustand jeder einzelnen Kreiselpumpe innerhalb des Systems kontinuierlich zu überwachen und zu analysieren.

Vorteilhafterweise ermöglicht dieses Verfahren eine zuverlässige, automatisierte Zustandsüberwachung von Kreiselpumpen in einem vernetzten Industrie-4.0-Umfeld. Durch die Nutzung beispielsweise drahtloser Übertragungstechnologie und cloudbasierter Auswertung wird eine umfassende und präzise Bestimmung des Betriebszustandes sichergestellt, was die Effizienz und Wartungsplanung innerhalb des gesamten Pumpensystems verbessert.

Bei einer Variante der Erfindung wird der Betriebszustand der Kreiselpumpe auf Ein oder Aus überwacht, wobei die cloudbasierte Auswerteeinheit ein Signal zum Ein- oder Ausschaltzustand jeder Pumpe generiert und speichert.

Beispielsweise sendet die Signalerzeugungseinheit als Sensor ein Signal an eine Regelungseinheit.

Die Vorrichtung ermöglicht zum Beispiel die direkte Einbindung des Sensorsignals in eine Regelungseinheit, um den Betriebszustand der Antriebseinheit einer Kreiselpumpe präzise zu erfassen und zu steuern. Durch die Signalerzeugungseinheit, die die mechanische Rotation des Luftstromrotors in elektrische Signale umwandelt, wird der Ein- oder Aus-Zustand der Pumpe zuverlässig erkannt. Diese Signale können drahtlos oder kabelgebunden an eine Regelungseinheit übertragen werden. Die Regelungseinheit interpretiert die Signale, um Schaltbefehle für die Pumpe zu generieren oder Betriebsoptimierungen vorzunehmen. Dadurch wird eine effiziente und automatisierte Steuerung der Pumpenbetriebsweise ermöglicht, was die Energieeffizienz steigert und Ausfälle reduziert.

Der Luftstromrotor fungiert als zentraler Bestandteil der Signalerzeugungseinheit, indem er den durch die Kühlrippen der Antriebseinheit erzeugten Luftstrom nutzt. Sobald der Luftstromrotor durch den Luftstrom in Rotation versetzt wird, erzeugt die Signalerzeugungseinheit ein elektrisches Signal, das den aktiven Zustand der Antriebseinheit widerspiegelt. Bei Stillstand des Rotors wird kein Signal erzeugt, was den Aus-Zustand der Pumpe signalisiert. Dieses binäre Verhalten ermöglicht eine präzise und unmittelbare Erkennung der Betriebszustände (An/Aus) der Kreiselpumpe.

Zusätzlich zur Ein-/Aus-Erkennung kann beispielsweise die Drehgeschwindigkeit des Luftstromrotors analysiert werden, um Rückschlüsse auf die Betriebsparameter der Antriebseinheit zu ziehen. Die Rotationsgeschwindigkeit des Rotors korreliert direkt mit der Drehzahl des Motors. Die durch den Rotor erzeugte elektrische Energie oder deren Momentanwerte dienen hierbei als Maß für die Geschwindigkeit. Diese Daten können genutzt werden, um den Betrieb der Pumpe genauer zu überwachen oder mit anderen Daten einer weiteren Überwachungseinheit wie beispielsweise der Motorsteuerung abzugleichen, potenzielle Abweichungen frühzeitig zu erkennen und die Effizienz der Pumpe zu optimieren.

Die Betriebsdauer der Antriebseinheit kann zum Beispiel durch die kontinuierliche Überwachung der Signale erfasst und aufgezeichnet werden. Jedes Start- und Stoppsignal wird registriert und in der Auswerteeinheit gespeichert. Diese Daten können lokal verarbeitet oder in ein cloudbasiertes System übertragen werden, um eine zentrale Verwaltung und Analyse zu ermöglichen. Die genaue Erfassung der Betriebsdauer ist essenziell für die Planung von Wartungsmaßnahmen und die Optimierung des Lebenszyklus der Pumpen. Durch die Integration in ein IIoT-System kann die Betriebsdauer jeder Pumpe innerhalb eines Netzwerks überwacht und dokumentiert werden.

Eine Möglichkeit, den Betriebszustand einer Kreiselpumpe ohne zusätzliche Sensorik schnell und zuverlässig zu erfassen, besteht darin, den durch die Kühlrippen der Antriebseinheit erzeugten Luftstrom zu nutzen. Wird dieser Luftstrom durch einen Luftstromrotor, der als Mini-Windturbine fungiert, erfasst, kann der Ein- oder Aus-Zustand des Motors erkannt werden, ohne dass eine externe oder interne Energiequelle erforderlich ist.

Die meisten Pumpen werden durch einen mechanisch gekoppelten Elektromotor angetrieben, der mit einem Ventilator ausgestattet ist. Dieser Ventilator erzeugt einen gerichteten Luftstrom, der entlang der Oberfläche des Motors geführt wird. Zusätzliche Kühlrippen verbessern dabei die Wärmeabgabe und erhöhen so die Belastbarkeit und Lebensdauer der Antriebseinheit. Die Erfindung nutzt diesen Luftstrom, indem ein Teil davon durch einen Luftstromrotor geleitet wird, der in die Vorrichtung integriert ist.

Die Rotation des Rotors wird beispielsweise über die Rotorachse auf eine Signalerzeugungseinheit übertragen. Anhand der Signale, die durch die Drehung des Luftstromrotors erzeugt werden, kann festgestellt werden, ob der Motor in Betrieb ist oder stillsteht. Darüber hinaus ermöglicht die Analyse der Rotationsgeschwindigkeit des Rotors eine Bestimmung der aktuellen Drehzahl des Motors.

Arbeitet die Vorrichtung beispielsweise im Generatorbetrieb, so kann die durch den Luftstromrotor erzeugte elektrische Energie direkt in ein Signal umgewandelt werden, das den Betriebszustand des Motors widerspiegelt. Diese Signalerzeugung erfolgt vollständig energieautark, ohne zusätzliche Energiequelle. Das erzeugte Signal kann sowohl als Start-/Stopp-Trigger als auch als Zustandssignal für ein angeschlossenes IIoT-Gerät dienen, welches die Maschine nur im eingeschalteten Zustand aktiv überwacht. Dadurch wird der Energieverbrauch des IIoT-Gerätes erheblich reduziert.

Beispielsweise können die Momentanwerte der durch die Signalerzeugungseinheit erzeugten elektrischen Energie darüber hinaus als Maß für die Drehzahl des Motors verwendet werden. Diese Daten sind besonders wertvoll, um das Betriebsverhalten der Maschine zu bewerten. Der elektrische Ausgang des Luftstromrotors dient somit nicht nur der einfachen Ein-/Aus-Zustandserkennung, sondern auch als Eingangssignal für eine erweiterte Sensorik in einem IIoT-System.

Ein zusätzlicher Vorteil der Erfindung ergibt sich aus der Möglichkeit, das angeschlossene IIoT-Gerät direkt mit der durch den Luftstromrotor erzeugten elektrischen Energie zu versorgen. Sofern ausreichend Energie generiert wird, kann das IIoT-Gerät energieautark betrieben werden, wodurch auf eine externe Batterie vollständig verzichtet werden könnte.

Bestehende Lösungen verwenden oft zur Erkennung des Betriebszustands das Schwingungsverhalten der Pumpe sowie Temperaturmessungen an verschiedenen Punkten. Diese Methoden erfordern jedoch eine dauerhafte Aktivität des IIoT-Gerätes, auch wenn die Maschine nicht in Betrieb ist, und führen oft zu Verzögerungen sowie Ungenauigkeiten bei der Zustandserkennung. Die hier vorgestellte Erfindung bietet hingegen eine nahezu verzögerungsfreie und präzise Erkennung des Betriebszustands. Zudem ermöglicht sie eine direkte Optimierung des Energieverbrauchs und der Datenmenge des IIoT-Gerätes, indem die Überwachung nur dann aktiv ist, wenn die Maschine tatsächlich in Betrieb ist.

Die Erfindung ist zudem kostengünstig und einfach zu implementieren, da sie auf einem kompakten Luftstromrotor basiert, der sich leicht an den Kühlrippen der Antriebseinheit befestigen lässt. Durch ihre Langlebigkeit, Energieautarkie und Effizienz eignet sich die Vorrichtung für eine Vielzahl von Anwendungen, insbesondere für den Betrieb in Industrie-4.0-Umgebungen.

Beispielsweise ist die Erfindung "retrofit" und kann auch an vielen Bestandspumpen zur Erfassung des Betriebszustands nachgerüstet werden. Durch die energieautarke Ausgestaltung kann die Vorrichtung zwischen zwei Kühlrippen des Elektromotors angebracht werden und kann durch die "Plug and Play"-Gestaltung in bestehende Cloud-Auswertesystem effizient integriert werden.

Weitere Merkmale und Vorteile der Erfindung ergeben sich aus der Beschreibung von Ausführungsbeispielen anhand der Zeichnungen und aus den Zeichnungen selbst.

Dabei zeigt:
- Fig. 1: eine perspektivische Darstellung einer Kreiselpumpe mit Antriebseinheit,
- Fig. 2: eine perspektivische Darstellung einer Anordnung.

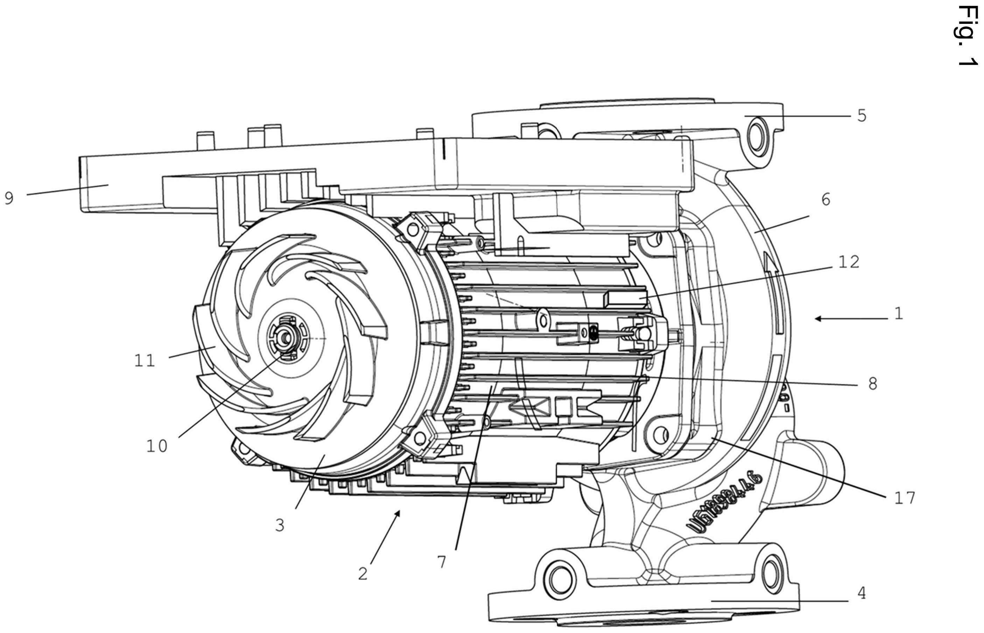

Fig. 1 zeigt eine perspektivische Ansicht einer Kreiselpumpe 1 mit Antriebseinheit 2 und Lüfterrad 3. Die Kreiselpumpe 1 ist in dieser Perspektive teilweise durch die Antriebseinheit 2 verdeckt, wobei ein Saugmund 4 darunter, ein Druckstutzen 5 darüber und ein Pumpengehäuse 6 seitlich erkennbar sind. Zwischen dem Pumpengehäuse 6 und dem Gehäuse 7 der Antriebseinheit 2 ist eine Laterne 17 angeordnet. Ein Gehäuse 7 der Antriebseinheit 2 weist Kühlrippen 8 auf, die teils senkrecht und teils waagrecht am Gehäuse 7 der Antriebseinheit 2 angeordnet sind. Auf dem Gehäuse 7 sitzt ein Klemmkasten 9 auf.

Auf der pumpenabgewandten Seite der Antriebseinheit 2 ist das Lüfterrad 3 auf einer durchgehenden Welle 10 angeordnet. Das Lüfterrad 3 weist in Drehrichtung rückwärts gekrümmte Schaufeln 11 auf, die einen leistungsstarken und geräuscharmen Kühlluftstrom erzeugen, der entlang der Kühlrippen 8 in Richtung Pumpengehäuse 6 über eine Anordnung 12 strömt.

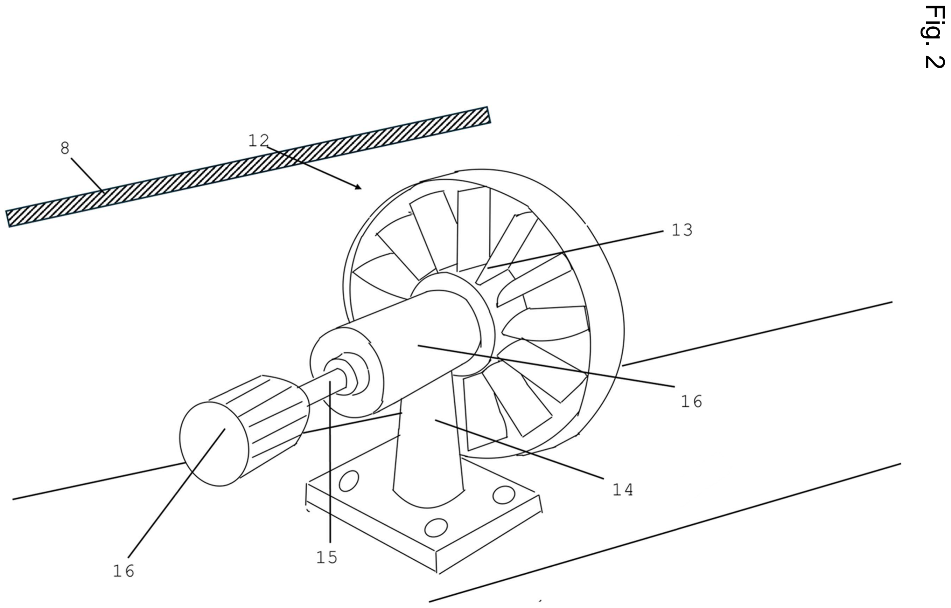

Fig. 2 zeigt eine perspektivische Darstellung einer Anordnung 12. Die Anordnung 12 umfasst in der dargestellten Ausführungsvariante einen Luftstromrotor 13, eine Halterung 14, eine Rotorachse 15 und eine Signalerzeugungseinheit 16. Die Halterung 14 trägt die Anordnung 12 und steht mit Kühlrippen 8 derart in Verbindung, so dass die Anordnung 12 zwischen zwei benachbarten Kühlrippen 8 positioniert ist.

Die Anordnung 12 ist zusammen mit einer nicht dargestellten Auswerteeinheit Teil der Vorrichtung. In der dargestellten Ausführungsvariante steht die Signalerzeugungseinheit 16 drahtlos mit der Auswerteeinheit in Verbindung.

Die Vorrichtung und das Verfahren zur Erkennung des Betriebszustandes einer Antriebseinheit 2 der Kreiselpumpe 1 ist innerhalb eines cloudbasierten Industrie-4.0-Systems mit der Auswerteeinheit eingebettet. Die Signalerzeugungseinheit 16 wird durch den Luftstromrotor 13 aktiviert, sobald sich die Antriebseinheit 2 der Kreiselpumpe 1 im Betriebszustand befindet. Dies geschieht durch die Bewegung des Kühlluftstroms, der den Luftstromrotor 13 antreibt und damit ein Signal generiert. Das erzeugte Signal wird drahtlos an die cloudbasierte Auswerteeinheit übertragen. Die cloudbasierte Auswerteeinheit verarbeitet die empfangenen Signale und bestimmt den Betriebszustand der Kreiselpumpe 1.

Zusätzlich zur Ein-/Aus-Erkennung wird die Drehgeschwindigkeit des Luftstromrotors 13 analysiert, um Rückschlüsse auf die Betriebsparameter der Antriebseinheit 2 zu ziehen. Die Rotationsgeschwindigkeit des Luftstromrotors 13 korreliert direkt mit der Drehzahl der Antriebseinheit 2. Die durch den Luftstromrotor 13 erzeugte elektrische Energie oder deren Momentanwert dienen hierbei als Maß für die Geschwindigkeit.

### Bezugszeichenliste

- 1: Kreiselpumpe
- 2: Antriebseinheit
- 3: Lüfterrad
- 4: Saugmund
- 5: Druckstutzen
- 6: Pumpengehäuse
- 7: Gehäuse der Antriebseinheit
- 8: Kühlrippen
- 9: Klemmkasten
- 10: Welle
- 11: Schaufeln
- 12: Anordnung
- 13: Luftstromrotor
- 14: Halterung
- 15: Rotorachse
- 16: Signalerzeugungseinheit
- 17: Laterne

## Patentansprüche

1. Vorrichtung zur Erkennung des Betriebszustandes einer Antriebseinheit (2) einer Kreiselpumpe (1), wobei ein Gehäuse (7) der Antriebseinheit (2) Kühlrippen (8) aufweist,
**dadurch gekennzeichnet,**
**dass** die Vorrichtung eine Anordnung (12) und eine Auswerteeinheit aufweist, wobei die Anordnung (12) einen Luftstromrotor (13), mindestens eine Halterung (14), eine Rotorachse (15) und eine Signalerzeugungseinheit (16) umfasst.

2. Vorrichtung nach Anspruch 1, **dadurch gekennzeichnet, dass** die Anordnung (12) eine Umhausung aufweist, welche den Luftstromrotor (13) zumindest teilweise umgibt.

3. Vorrichtung nach Anspruch 1 oder 2, **dadurch gekennzeichnet, dass** die Halterung (14) mit benachbarten Kühlrippen (8) in Verbindung steht.

4. Vorrichtung nach Anspruch 1 oder 2, **dadurch gekennzeichnet, dass** die Halterung (14) mit einer Laterne (17) oder dem Gehäuse (7) der Antriebseinheit (2) oder einem Pumpengehäuse (6) in Verbindung steht.

5. Vorrichtung nach einem der Ansprüche 1 bis 4, **dadurch gekennzeichnet, dass** die Signalerzeugungseinheit (16) drahtlos mit der Auswerteeinheit in Verbindung steht.

6. Vorrichtung nach einem der Ansprüche 1 bis 5, **dadurch gekennzeichnet, dass** die Signalerzeugungseinheit (16) einen Generatorbetriebsmodus aufweist.

7. Vorrichtung nach einem der Ansprüche 1 bis 6, **dadurch gekennzeichnet, dass** die Signalerzeugungseinheit (16) drahtlos mit einem IIoT-Gerät in Verbindung steht.

8. Verfahren zur Erkennung des Betriebszustandes einer Antriebseinheit (2) einer Kreiselpumpe (1) in einem cloudbasierten *Industrie-4.0-System,* welches eine Vielzahl von Kreiselpumpen (1) umfasst, wobei jede Kreiselpumpe (1) eine Antriebseinheit (2) mit Kühlrippen (8) und eine Vorrichtung zur Erkennung des Betriebszustandes gemäß den Ansprüchen 1 bis 4 aufweist, umfassend die Schritte:
• Aktivieren der Signalerzeugungseinheit (16) durch den Luftstromrotor (13), wenn sich die Antriebseinheit (2) im Betriebszustand befindet,
• drahtlose Übermittlung des Signals von der Signalerzeugungseinheit (16) zur Auswerteeinheit,
• Erfassung und Verarbeitung der empfangenen Signale in einer cloudbasierten Auswerteeinheit zur Bestimmung des Betriebszustandes jeder Kreiselpumpe (1).

9. Verfahren nach Anspruch 8, **dadurch gekennzeichnet, dass** der Betriebszustand der Kreiselpumpe (1) auf Ein oder Aus überwacht wird und die cloudbasierte Auswerteeinheit ein Signal zum Ein- oder Ausschaltzustand jeder Kreiselpumpe (1) generiert und speichert.

10. Verfahren nach Anspruch 8 oder 9, **dadurch gekennzeichnet, dass** die Signalerzeugungseinheit (16) aus der Drehzahl des Luftstromrotors (13) ein Signal zum Betriebszustand erzeugt und der Auswerteeinheit übermittelt.

11. Verfahren nach einem der Ansprüche 8 bis 10, **dadurch gekennzeichnet, dass** die Signalerzeugungseinheit (16) in einem Generatorbetriebsmodus mindestens die Energie zum Betrieb der Anordnung (12) erzeugt.

12. Verfahren nach einem der Ansprüche 8 bis 11, **dadurch gekennzeichnet, dass** die Signalerzeugungseinheit (16) in einem Generatorbetriebsmodus mindestens die Energie zum Betrieb eines IIoT-Gerätes erzeugt.

13. Verfahren nach einem der Ansprüche 8 bis 12, **dadurch gekennzeichnet, dass** die Signalerzeugungseinheit (16) als Sensor ein Signal an eine Regelungseinheit sendet.
